# EUROPEAN PATENT SPECIFICATION

(11) **EP 4 065 035 B1**
(45) Date of publication and mention of the grant of the patent: **01.05.2024**
(21) Application number: 20828297.0
(22) Date of filing: 26.11.2020
(51) Int. Cl.: A61C 1/00, A61C 19/00

(54) **WATER SYSTEM FOR A DENTAL CARE UNIT AND A DENTAL CARE UNIT**
WASSERSYSTEM FÜR EINE ZAHNÄRZTLICHE BEHANDLUNGSEINHEIT UND EINE ZAHNÄRZTLICHE BEHANDLUNGSEINHEIT
SYSTÈME D'EAU POUR UNITÉ DE SOINS DENTAIRES ET UNITÉ DE SOINS DENTAIRES

(30) Priority: 26.11.2019 FI 20196015; 26.11.2019 FI 20196017
(43) Date of publication of application: 05.10.2022
(73) Proprietor: Planmeca OY, 00880 Helsinki (FI)
(72) Inventor: HYVÄRINEN, Pentti, 00880 Helsinki (FI)
(86) International application number: PCT/FI2020/050800
(87) International publication number: WO 2021/105566

(56) References cited:
- GB-A- 917 446
- US-A1- 2003 190 257
- US-A1- 2016 339 371

## Description

### FIELD OF TECHNOLOGY

This disclosure concerns dental care units. In particular, this disclosure concerns water systems for dental care units.

### BACKGROUND

Most conventional dental care units comprise a water system configured to provide water for various purposes during dental treatment. Generally, a tab water is being used when the water quality is such that it can be safely used in dental care units. If not, typically, reservoirs specifically configured for bottled water are used. To this end, water systems of typical dental care units comprise an upright bottle-shaped container with a bottom part, a tapered neck, and a mouth equipped with sealing and support mechanisms for connecting the container to the rest of the water system.

Usage of such bottle-shaped container necessitates utilization of an inlet tube, extending through the mouth and neck of the container to the bottom thereof, to enable utilization of at least most of the water stored in the container. However, such inlet tubes may prove difficult to clean and disinfect.

Typically, a container bottle is pressurized with compressed air, to feed the water therefrom to dental care unit's waterlines. Thus, such bottle is a pressure chamber and must be strong and typically the walls of such bottles are very thick. When thick walls are not transparent, it is impossible to visually detect and based on that control the amount of water in the bottle. Further, re-filling of such bottle is not possible during use.

Considering this, it may be desirable to develop new solutions related to dental care units and water systems thereof. A supply container for use with a dental unit is known from GB 917 446 A. A water filter is known from US 2016/339371 A1.

### SUMMARY

The invention is defined by the independent claim. This summary is provided to introduce a selection of concepts in a simplified form that are further described below in the Detailed Description. This Summary is not intended to identify key features or essential features of the claimed subject matter, nor is it intended to be used to limit the scope of the claimed subject matter. According to a first aspect, a water system for a dental unit is provided. The water system comprises a vessel, comprising a bottom and a side wall, extending from the bottom and having an inner surface; a vessel holder, wherein, in an assembled state, the vessel holder supports the vessel and is engaged with the dental unit; and an insert, comprising a tubular wall structure with a first open end and an exterior surface. The first open end of the tubular wall structure is arranged in the vessel in the assembled state such that a water conduit is formed, the water conduit extending from the first open end of the tubular wall structure between the inner surface of the side wall and the exterior surface of the tubular wall structure.

One of the advantages of the system is that it is easy to clean and fill. The filling and refilling of the vessel may be done even during operation, i.e. when the water system is in use. There is no need to stop the operation when the water level lowers. Further, water may be arranged to be supplied to the system automatically.

In an embodiment, the water conduit has a thickness, t, measured perpendicular to the inner surface of the side wall and/or perpendicular to the exterior surface of the tubular wall structure, of 0,1-1 mm.

In an embodiment, in a disassembled state, the insert is removed from the vessel.

In an embodiment, the vessel has an center line, extending in the assembled state through the first open end of the tubular wall structure, and any transverse distance, DT(z), measured perpendicular to and from the center line to the inner surface along a constant azimuthal direction, is non-decreasing with increasing axial distance, z, from a top surface of a bottom of the vessel.

In an embodiment, the top surface of the bottom is outlined by the inner surface of the side wall, and a maximum height difference, Δhₘₐₓ, between the first open end of the tubular wall structure and the top surface of the bottom in the assembled state is 1-5 mm. It may also be less than or equal to 20 mm, or less than or equal to 10 mm, or less than or equal to 8 mm, or less than or equal to 1 mm.

In an embodiment, the vessel holder comprises a through-hole, and the vessel is configured to be arranged in the through-hole in the assembled state of the water system. In an embodiment, the insert is supported by the vessel in the assembled state.

In an embodiment, the vessel and/or the insert is formed of a plastic material.

According to the invention, the system comprises above a second open end of the insert a lid. The lid may be configured to couple with the insert in the assembled state. The lid may comprise a fluid duct configured to provide a fluid communication path between the water conduit and an ambient environment in the assembled state.

According to the invention, the system comprises a fluid-tight first seal joining the insert with the lid, a fluid-tight second seal joining the lid and the vessel holder, and/or a fluid-tight third seal joining the vessel holder with the vessel, whereby a collection space is defined, the water conduit extending from the first open end of the tubular wall structure to the collection space.

In an embodiment, the system comprises a pump arranged upstream of the collection space for effecting fluid flow in the water conduit.

In an embodiment, the system comprises a water supply line for supplying water into the vessel via the fluid duct in the assembled state.

In an embodiment, the lid has a top surface, the water supply line has a supply line end, and a minimum height difference, Δhₘᵢₙ, between the top surface and the supply line end in the assembled is at least 10 mm, or at least 20 mm.

In an embodiment, the system comprises a disinfectant container for storing disinfectant and a disinfectant supply line for supplying disinfectant from the disinfectant container into the vessel via the fluid duct. In an embodiment, the system comprises a weighing device for determining weight of any liquids possibly arranged in the vessel in the assembled state.

According to a second aspect, a dental care unit is provided. The dental care unit comprises a water system in accordance with the first aspect.

Also disclosed but not claimed is a water container for a dental care unit. The water container comprises: a vessel, comprising a bottom and a side wall, extending from the bottom and having an inner surface; an insert, comprising a tubular wall structure with a first open end and an exterior surface; wherein the first open end of the tubular wall structure is arranged in the vessel so that a water conduit is formed, the water conduit extending from the first open end of the tubular wall structure between the inner surface of the side wall and the exterior surface of the tubular wall structure; whereby the water in the water container is arranged to be emptied via the water conduit.

### BRIEF DESCRIPTION OF THE DRAWINGS

The present disclosure will be better understood from the following Detailed Description read in light of the accompanying drawings, wherein:
**FIG. 1** shows a partial cross-sectional view of a water system for a dental care unit in an assembled state thereof,
**FIG. 2** depicts a dental care unit comprising a water system.
**FIG. 3** shows a partial cross-sectional view of a water system comprising disinfection means.

Unless specifically stated to the contrary, any drawing of the aforementioned drawings may be not drawn to scale such that any element in said drawing may be drawn with inaccurate proportions with respect to other elements in said drawing in order to emphasize certain structural aspects of the embodiment of said drawing.

Moreover, corresponding elements in the embodiments of any two drawings of the aforementioned drawings may be disproportionate to each other in said two drawings in order to emphasize certain structural aspects of the embodiments of said two drawings.

### DETAILED DESCRIPTION

Concerning water systems and dental care units discussed in this detailed description, the following shall be noted.

A "dental unit", or a "dental care unit", or a "dental treatment unit" may refer to a piece of equipment used in provision of dental care. A dental care unit may generally comprise any part(s) or element(s) necessary or beneficial for provision of dental care, e.g., a chair, a light source, one or more dental instruments, an instrument holder, and/or data input/output devices, such as a keyboard, a touchscreen, and/or a viewscreen. A dental care unit typically comprise a water system.

In this specification, a "water system" may refer to a system for providing water for various purposes during use of a dental unit. Such uses may comprise, for example, feeding water through dental instruments for cooling e. g. cutting drill or rinsing chips from the surface of tooth being treated and/ or filling a cup for mouth rinsing. A water system may generally comprise any part(s) or element(s) necessary or beneficial for such provision of water, e.g., a water reservoir, such as a vessel; a water supply line for providing fresh water; one or more pumps; water lines; hoses; fittings; valves; a drainage system; a water purifier; and/or a cleaning device or arrangement for cleaning and disinfection of said water system or a part thereof.

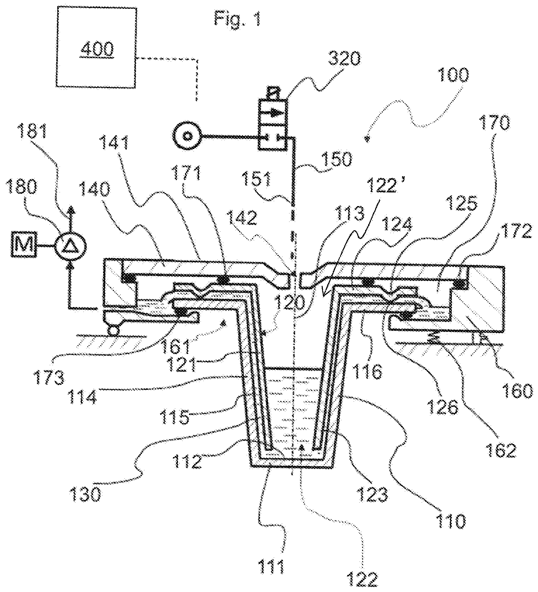

FIG. 1 depicts a partial cross-sectional view of a water system 100 for a dental unit according to an embodiment. Since FIG. 1 depicts a cross-sectional view of the water system 100, FIG. 1 does not limit shapes of the embodiment of FIG. 1 or any part(s) thereof in any direction forming an angle with the cross-sectional plane of FIG. 1.

In this specification, a "vessel" may refer to a hollow container suitable for holding liquid, such as water. A vessel may or may not be (substantially) bowl-shaped and/or cup-shaped.

The water system 100, as described for example in Fig.1, comprises a vessel 110 comprising a bottom 111 and a side wall 114. The side wall 114 extends from the bottom 111. The side wall 114 has an inner surface 115. Herein, an "inner surface" of a side wall of a vessel may refer to a surface of said side wall configured to be in contact with a liquid, when the vessel is used for holding said liquid, or a part thereof.

The vessel 110 may further comprises a flange 116, extending outward from the side wall 114 from an end thereof opposite to the bottom 111. In some embodiments, a vessel may not comprise such flange.

The water system 100 comprises a vessel holder 160, supporting the vessel 110. As such, the water system 100 is depicted in FIG. 1 in an assembled state thereof.

In an embodiment, the vessel holder is a part of the vessel, i.e. the vessel and the vessel holder form a uniform part. It should be noted that any embodiment described herein, may comprise uniform vessel and vessel holder, or separate vessel and vessel holder.

Herein, an "assembled state" may refer to a state of a water system, wherein a vessel holder supports a vessel. On the other hand, a "disassembled state" may refer to a state of a water system, wherein a vessel holder is at a distance from a vessel.

Further, the water system 100 comprises an insert 120 having a tubular wall structure 121. The tubular wall structure 121, as shown for example in Fig. 1, has a first open end 122 and an exterior surface 123.

Throughout this disclosure, the term "tubular" is to be interpreted broadly. As such, the term tubular may refer to any elongate and hollow shape, which may have any suitable cross-sectional shape. A tubular element may or may not have a circular, substantially circular, elliptical, or polygonal cross section. Additionally or alternatively, a tubular element may or may not be tapered, cylindrical, and/or curvilinear. Consequently, a "tubular wall structure" may refer to at least part of an insert, having a tubular shape.

Throughout this disclosure, a "first open end" of a tubular wall structure may refer to a bottom end thereof configured for insertion in a vessel. Additionally or alternatively, the first open end in the tubular wall structure may refer to said tubular wall structure defining an inner volume, accessible via said first open end. The tubular wall structure of the insert also has at its top end a second open end.

In this specification, an "exterior surface" of a tubular wall structure may refer to a surface of said tubular wall structure configured to be arranged opposite an inner surface of a vessel in an assembled state of a water system, or a part thereof. Additionally or alternatively, when a tubular wall structure defines an inner volume, an exterior surface of said tubular wall structure may refer to a surface of said tubular wall structure not connected with said inner volume, or a part thereof.

In FIG. 1, the first open end 122 of the tubular wall structure 121 is arranged in the vessel 110 in such manner that a water conduit 130 is formed. The water conduit 130 of the embodiment of FIG. 1 extends from the first open end 122 of the tubular wall structure 121 and between the inner surface 115 of the side wall 114 and the exterior surface 123 of the tubular wall structure 121. Generally, arranging a vessel and an insert in such manner that such water conduit is formed may enable utilization of a significant portion of water in the vessel, even in the absence of tubing extending upstream of the vessel. Additionally or alternatively, such arrangement of a vessel and an insert may facilitate filling, cleaning, and/or disinfection, especially while there is no tubing extending in a water reservoir.

Herein, a "water conduit" may refer to a channel, passage, or duct for transporting a fluid, such as a liquid, e.g., water.

The exterior surface 123 may be complementarily shaped with the inner surface 115 of the side wall 114 such that the first open end 122 of the tubular wall structure 121 may be arranged in the vessel 110, as depicted in FIG. 1. In embodiments, the exterior surface of the tubular wall structure may be shaped, for example, complementarily, with the inner surface of the side wall of the vessel, enabling arrangement of the first open end of said tubular wall structure in said vessel in an assembled state.

Herein, an exterior surface being "complementarily shaped" with the inner surface may refer to said surfaces being arrangeable so as to form a technically relevant arrangement or element.

The inner surface 115 may have a frustoconical shape. Generally, the inner surface of the side wall may have any suitable shape. In some embodiments, the inner surface of the side wall may have a cylindrical, or conical, or truncated conical, or pyramidal, or truncated pyramidal, or frustal, or frustoconical shape. Such shapes may generally facilitate arranging the insert into a vessel. Additionally or alternatively, such shapes may facilitate cleaning a water system by improving access to an inner surface and/or a bottom of a vessel.

The water conduit 130 may have a thickness t of 1-2 mm, for example. Generally, a higher thickness of a water conduit may facilitate usage of higher mass and/or volumetric flow rates in a water system. In embodiments, the water conduit may have any suitable thickness. In some embodiments, the water conduit may have a thickness of 0,1-1 mm.

Herein, a "thickness" of the water conduit may refer to a transverse dimension of said water conduit. A thickness of a water conduit may generally be measured perpendicular to an inner surface of a side wall and/or perpendicular to an exterior surface of a tubular wall structure, i.e. minimum distance between the inner surface of the side wall and exterior surface of the tubular wall structure.

A shown for example in Fig. 1, the tubular wall structure 121 may be removable from the vessel 110 in the disassembled state. The tubular wall structure of the insert being removable from the vessel may facilitate cleaning and/or disinfecting said insert and/or said vessel. Additionally or alternatively, the tubular wall structure of the insert being removable from the vessel may facilitate usage of automated cleaning tools, such as a dishwasher, for purification of said insert and/or said vessel. In embodiments, the tubular wall structure of the insert may or may not be removable from the vessel in a disassembled state.

In Fig. 1, the vessel 110 has an (imaginary) center line 113, extending through the first open end 122 of the tubular wall structure 121.

Herein, a "center line" may refer to any suitable (imaginary" line. A center line may or may not extend through center point(s), such as a center of mass and/or a centroid, of a vessel. A center line may or may not extend along a symmetry axis and/or a symmetry plane of a vessel. A center line may or may not be arranged (substantially) vertically in an assembled state.

Any transverse distance D_{T}(z), measured perpendicular to and from the center line 113 to the inner surface 115 along a constant azimuthal direction, is non-decreasing with increasing axial distance z from the top surface 112. Such shape of a vessel may generally facilitate insertion of an insert into said vessel and/or removal of an insert from said vessel. In embodiments, a vessel may or may not be shaped in such manner.

In a cross section of the water system 100, as shown for example in FIG. 1, perpendicular to the center line 113, the water conduit 130 may form a continuous loop surrounding the exterior surface 123 of the tubular wall structure 121. Such cross-sectional shape of a water conduit may facilitate usage of higher mass and/or volumetric flow rates in a water system. In embodiments, in a cross section of a water system perpendicular to a center line, a water conduit may or may not form a continuous loop surrounding an exterior surface of a tubular wall structure.

The bottom 111 has a top surface 112, which may be outlined by the inner surface 115 of the side wall 114. Generally, a bottom may have such top surface.

The top surface 112 may be continuous, as shown for example in FIG. 1. In embodiments, a top surface of a bottom may or may not be continuous. For example, in some embodiments, a bottom may comprise an extrusion with a through-hole, the extrusion extending through an open end of a tubular wall structure in an assembled state.

In FIG. 1, a maximum height difference Δhₘₐₓ between the open end 122 of the tubular wall structure 121 and the top surface 112 of the bottom 111 may be, for example, 5 millimeters (mm). In embodiments, any suitable maximum height difference may exist between the first open end and a top surface. In some embodiments, a maximum height difference is 1-5 mm. A lower maximum height difference may generally enable utilization of a higher portion of water storable in the vessel.

The vessel holder 160 may comprise a through-hole 161, as shown for example in FIG. 1. The vessel 110 is configured to be arranged in the through-hole 161 in the assembled state of the water system 100. To this end, in the assembled state of the water system 100, the flange 116 of the vessel 110 is coupled with the vessel holder 160, and the side wall 114 of the vessel 110 extends through the through-hole 161. Such arrangement of a vessel in a through-hole of a vessel holder may generally facilitate forming a fluid-tight coupling between said vessel and said vessel holder.

In embodiments, a vessel may be configured to be arranged in a through-hole of a vessel holder in an assembled state of the water system. In embodiments, wherein a vessel is configured in such manner, said vessel may or may not comprise a flange. For example, in some embodiments, a side wall of a vessel may be coupled with vessel holder in the absence of any flange in said vessel.

As depicted in FIG. 1, the insert 120 may be supported by the vessel 110 in the assembled state of the water system 100. Such arrangement may generally facilitate forming a water conduit between an inner surface of a side wall and an exterior surface of a tubular wall structure. In embodiments, an insert may or may not be supported by a vessel in an assembled state of a water system. Generally, an insert may be supported by any suitable means in an assembled state of a water system. For example, in some embodiments, wherein a water system comprises a frame and/or a vessel holder, an insert may be supported by said frame and/or said vessel holder.

The insert 120 may comprise a projecting part 124, such as flange, extending from the tubular wall structure 121. In embodiments, an insert may or may not comprise such projecting part.

The projecting part 124 may comprise a plurality of depressions, each depression 125 of the plurality of depressions providing a supporting surface 126. In embodiments, a projecting part may or may not comprise a support element, such as a depression or a protrusion, for providing a supporting surface.

The supporting surfaces 126 may be configured to be connected with the flange 116 of the vessel 110 in the assembled state of the water system 100, as shown for example in FIG. 1. In embodiments, a supporting surface may or may not be configured to be connected with a vessel, e.g., a flange thereof, in an assembled state of a water system. In some embodiments, an insert may comprise a support element, such as a depression or a protrusion, in the absence of a projecting part and/or a vessel may comprise a support element for supporting an insert. Generally, a plurality, i.e., two or more, three or more, etc., of support elements may be used. In some embodiments, a separate support element, such as perforated ring, may be arranged between a vessel and an insert.

In the embodiment, as shown for example in FIG. 1, the vessel 110 and the insert 120 may be formed of a plastic material. Such material choice may facilitate usage of high-throughput fabrication methods in manufacturing of a vessel and/or an insert. Additionally or alternatively, usage of plastic materials may reduce corrosionrelated effects, when a vessel and/or an insert is subjected to cleaning agents. In embodiments, a vessel and/or an insert may comprise or be formed of any suitable material(s), such as plastics, metals, and/or ceramics.

In figure 1, the water system 100 comprises a lid 140. The lid 140 has a top surface 141, facing upwards in the assembled state of the water system 100. The lid 140 is configured to couple with, more specifically rest on and be supported by, the insert 120 in the assembled state of the water system 100. In embodiments, a water system may or may not comprise a lid. In said other embodiments, said lid may or may not be configured to couple with, e.g., rest on and/or be supported by, an insert in an assembled state.

The lid 140, as shown for example in FIG. 1, may comprise a fluid duct 142. The fluid duct 142 is configured to provide a fluid communication path between the water conduit 130 and ambient environment in the assembled state of the water system 100. Generally, a lid with such fluid duct may facilitate provision of replacement air into a vessel, when a water system is used. Provision of replacement air may, in turn, simplify an overall design of a water system and/or reduce manufacturing constraints thereof.

Throughout this specification, "ambient environment" may refer to any surroundings of a dental unit and/or a water system thereof. Additionally or alternatively, an ambient environment may refer to ambient gas, such as ambient air and/or gas atmosphere, surrounding a dental unit and/or a water system thereof.

Regardless whether or not a lid is arranged to the water system, the second open end 122' of the insert is in connection with the ambient environment.

In an embodiment, the water system 100 may comprise a fluid-tight first seal 171 joining the insert 120 with the lid 140, a fluid-tight second seal 172 joining the lid 140 and the vessel holder 160, and/or a fluid-tight third seal 173 joining the vessel holder 160 with the vessel 110. In embodiments, the water system may or may not comprise such first seal, such second seal, and/or such third seal.

In embodiments wherein the vessel and the vessel holder form a uniform part, there is no need for third seal 173 for joining the vessel holder with the vessel.

In this specification, a "seal" may refer to any part, element, or structure suitable for providing a fluid-tight, e.g., liquid-tight, such as water-tight, and/or gas-tight, such as air-tight, coupling between a first object and a second object coupled with the first object. A seal may join such first object with such second object. Additionally or alternatively, such second object may be coupled with such first object via a seal. A seal may comprise any suitable element(s) for provision of such fluid-tight coupling, for example, a gasket, such as an O-ring, or a sealant, or the like.

Since the water system 100 of the embodiment of FIG. 1 comprises the first seal 171, the second seal 172, and the third seal 173, a collection space 170 is defined. The water conduit 130 extends from the first open end 122 of the tubular wall structure 121 to the collection space 170 between the inner surface 115 of the side wall 114 and the exterior surface 123 of the tubular wall structure 121 to the collection space 170. As such, the water conduit 130 may transport water towards the collection space 170 from the vessel 110, when the water system 100 is used. Such collection space may generally simplify a structure of a water system. Additionally or alternatively, such collection space may facilitate usage of more rigid parts and/or elements in a water system, which may, in turn, facilitate mechanical and/or automated cleaning of said water system. In other embodiments, a water system may not comprise such collection space.

The collection space 170, as shown for example in FIG. 1, may be in fluid communication with the ambient environment via the water conduit 130 and the fluid duct 142.

The water system 100 may further comprise a pump 180, which may be arranged upstream of the collection space 170. The pump 180 may be used to effect fluid flow, e.g., water flow, in the water conduit 130. Such arrangement of a pump may, for example, increase fluid-tightness of a first seal, a second seal, and/or a third seal. In embodiments, a water system may or may not comprise such pump. In embodiments, wherein a pump is arranged upstream of the water conduit for effecting fluid flow therein, any suitable type of pump, for example, a positive displacement pump, may be used.

As shown for example in FIG. 1, the water system 100 may further comprise a water delivery line 181. The water delivery line 181 provides a fluid communication path after the collection space 170 and/or the pump 180.

Herein, a "water delivery line" may refer to a fluid flow line configured to distribute water from a water reservoir of a water system within said water system. A water delivery line may be configured, for example, to supply water via dental instruments into a patient's mouth and/or via a tap to a cup, when a water system is used. In embodiments, a water system may or may not comprise a water delivery line. In embodiments, wherein a water system comprises a water delivery line, a water delivery line may or may not be in fluid communication with a collection space.

As shown for example in FIG. 1, the water system 100 may further comprise a water supply line 150. In embodiments, a water system may or may not comprise a water supply line. For example, in some embodiments, a water system may be supplied with water manually.

The water supply line 150 may be configured to supply water, e.g., tap water from a public tap water network, into the vessel 110 via the fluid duct 142 of the lid 140, whenever required. Such fluid duct may generally facilitate provision of water into a vessel, when a water system is used. In embodiments, a water system may or may not comprise a water supply line configured in such manner.

The water supply line 150 may have a supply line end 151. In the assembled state of the water system 100, the supply line end 151 is arranged above the fluid duct 142 of the lid 140. In the assembled state, a minimum height difference Δhₘᵢₙ between the top surface 141 of the lid 140 and the supply line end 151 may be, for example, 5 mm, 15 mm, 20 mm, 30 mm, or 50 mm. Generally, a higher minimum height difference between a top surface and a supply line end may facilitate preventing backflow of water from a vessel into a water supply line, when a water system is used. Protection against pollution of potable water and backflow prevention are discussed, for example, in standard BS EN 1717. In embodiments, any suitable minimum height differences may be used. In some embodiments, a minimum height difference between a top surface and a supply line end in an assembled state of a water system may be at least 10 mm, or at least 20 mm.

The water system 100 may comprise a weighing device 162 for determining weight of any liquids possibly arranged in the vessel 110 in the assembled state. Such weighing device may enable determining, for example, automatically, a quantity of liquid(s) inside a vessel, even in the absence of sensor elements in said vessel. Additionally, or alternatively, such weighing device may facilitate disinfection of a water system by increasing precision of mixing ratios between water and disinfectant. In embodiments, a water system may or may not comprise such weighing device.

Throughout this specification, a "weighing device", may refer to any device for measuring a weight of an object. A weighing device may generally comprise any part(s) and/or element(s) suitable or necessary for measuring a weight of an object. A weighing device may comprise, for example, a balance scale and/or a force-measuring scale.

In one embodiment, the weighing device comprises a force-measuring scale 162 arranged between the vessel holder 160 and the dental unit, on which the vessel holder is arranged, for measuring the weight of the vessel holder, vessel, the insert and the liquid inside the vessel.

In one embodiment, the system may comprise a pivoting means 163, such as joint, for pivoting the vessel holder about it. In an embodiment, the weighing device is arranged on the other side of the vessel than the pivoting means. However, the weighing device may be on the same side of the vessel as the pivoting means 163.

The water system 100 may comprise a control unit 400 configured to control the operation the water system 100 of a dental unit. The control unit 400 may be coupled to control water control valve 320 so that the water flow from the water line is adjusted by the controller unit.

The control unit 400 may be configured to execute the water circulating process of the water system.

For example, the control unit 400 may be configured to receive a signal from the weighing device 162, which signal discloses the measurement data of the weight. The control unit determines the needed amount of water, based on the measurement data of the weight, and transmits another signal to the water control valve 320 to supply needed amount of water into to vessel to achieve pre-determined amount of water and for the operation. The control unit may also be configured to control the water control valve without the measurement data.

The control unit 400 may also be configured to execute the circulation process of the disinfection liquid in the water system.

The control unit 400 may be configured to open the water control valve 320, when the weighing device recognizes that the water in the vessel is too low, i.e. the water system is configured to control the amount of water in the system and that the amount is enough for operation. This control may occur even during the operation.

The couplings between the control unit 400 and the other elements of the systems may be a wired coupling or wireless coupling, or it may comprise both wired and wireless elements either as alternatives of each other or augmenting each other.

If the water system 100 is not connected to the water line of a building, i.e. the water for the dental unit is provided with a separate means, e.g. by a bottle, the control unit 400 is configured to alarm when the amount of water in the vessel is lower than pre-determined level. When the alarm is noticed, a user may fill the vessel from a bottle.

The controller 400 may be installed inside the dental unit, or it may be installed outside of the dental unit.

In an embodiment, the control unit 400 is connected to a memory comprising a computer program comprising instructions which, when the program is executed by a computer, cause the computer to carry out the disinfection process and/or the water circulating process and embodiments of these described herein.

The control unit 400 may have a central role in the operation of the system. Structurally and functionally it may be based on one or more processors configured to execute machine-readable instructions stored in one or more memories that may comprise at least one of built-in memories or detachable memories.

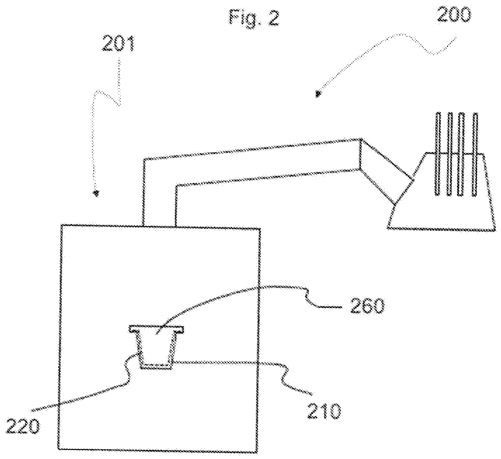

FIG. 2 depicts schematically a dental care unit 200 according to an embodiment. The embodiment of FIG. 2 may be in accordance with any of the embodiments disclosed with reference to, in conjunction with, and/or concomitantly with FIG. 1. Additionally, or alternatively, although not explicitly shown in FIG. 2, the embodiment of FIG. 2 or any part thereof may generally comprise any features and/or elements of any of the embodiment of FIG. 1.

The dental care unit 200 of Fig. 2 comprises a water system 201. The water system 201 comprises a vessel 210 and an insert 220. The vessel 210 and the insert 220 may be arranged inside or outside a housing or the like. The water system 201 further comprises a vessel holder 260.

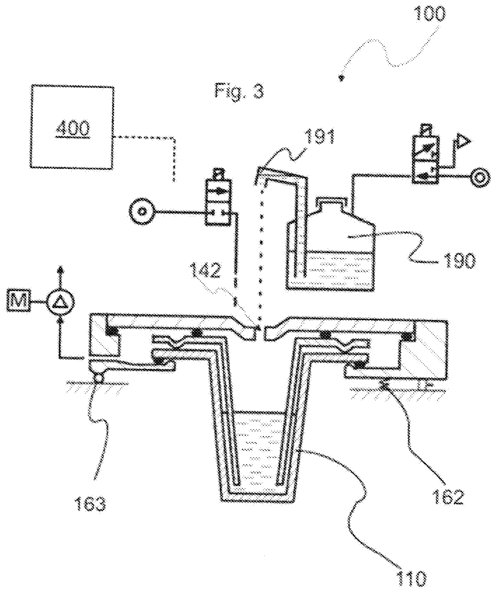

As shown in FIG. 3, the water system 100 may comprise a disinfectant container 190 for storing disinfectant and a disinfectant supply line 191, configured to supply disinfectant from the disinfectant container 190 through the fluid duct 142 into the vessel 110. Such disinfectant container and such disinfectant supply line may facilitate automation of disinfection of a water system. Additionally, or alternatively, such disinfectant container and such disinfectant supply line may facilitate disinfecting a water system in an assembled state thereof. In embodiments, a water system may or may not comprise such disinfectant container and a disinfectant supply line.

Example embodiments may be implemented in software, hardware, application logic or a combination of software, hardware and application logic. The example embodiments can store information relating to various methods described herein. This information can be stored in one or more memories, such as a hard disk, optical disk, magneto-optical disk, RAM, and the like. One or more databases can store the information used to implement the example embodiments. The databases can be organized using data structures (e.g., records, tables, arrays, fields, graphs, trees, lists, and the like) included in one or more memories or storage devices listed herein. The methods described with respect to the example embodiments can include appropriate data structures for storing data collected and/or generated by the methods of the devices and subsystems of the example embodiments in one or more databases.

The components of the example embodiments may include computer readable medium or memories for holding instructions programmed according to the teachings and for holding data structures, tables, records, and/or other data described herein. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer. A computer-readable medium may include a computer-readable storage medium that may be any media or means that can contain or store the instructions for use by or in connection with an instruction execution system, apparatus, or device, such as a computer. A computer readable medium can include any suitable medium that participates in providing instructions to a processor for execution. Such a medium can take many forms, including but not limited to, non-volatile media, volatile media, transmission media, and the like.

The term "comprising" is used in this specification to mean including the feature(s) or act(s) followed thereafter, without excluding the presence of one or more additional features or acts. It will further be understood that reference to 'an' item refers to one or more of those items.

### REFERENCE SIGNS

| Δhₘₐₓ | maximum height difference | | |
|---|---|---|---|
| Δhₘᵢₙ | minimum height difference | | |
| t | thickness | | |
| D_{T}(z) | transverse distance | | |
| z | axial distance | | |
| 100 | water system | 150 | water supply line |
| 110 | vessel | 151 | supply line end |
| 111 | bottom | 160 | vessel holder |
| 112 | top surface | 161 | through-hole |
| 113 | center line | 162 | weighing device |
| 114 | side wall | 170 | collection space |
| 115 | inner surface | 171 | first seal |
| 116 | flange | 172 | second seal |
| 120 | insert | 173 | third seal |
| 121 | tubular wall structure | 180 | pump |
| 122 | first open end | 181 | water delivery line |
| 122' | second open end | 190 | disinfectant container |
| 123 | exterior surface | 191 | disinfectant supply line |
| 124 | projecting part | 200 | dental unit |
| 125 | depression | 201 | water system |
| 126 | supporting surface | 210 | vessel |
| 130 | water conduit | 220 | insert |
| 140 | lid | 260 | vessel holder |
| 141 | top surface | 320 | water control valve |
| 142 | fluid duct | 400 | control unit |

## Claims

1. A water system (100) for a dental care unit, the water system (100) comprising:
- a vessel (110), comprising a bottom (111) and a side wall (114), extending from the bottom (111) and having an inner surface (115);
- a vessel holder (160), wherein, in an assembled state, the vessel holder (160) supports the vessel (110) and is engageable with the dental unit; and
- an insert (120), comprising a tubular wall structure (121) with an exterior surface (123) and having a first open end (122) at its bottom end and a second open end 122' at its top end;
wherein the first open end (122) of the tubular wall structure (121) is arranged in the vessel (110) in the assembled state such that a water conduit (130) is formed, the water conduit (130) extending from the first open end (122) of the tubular wall structure (121) between the inner surface (115) of the side wall (114) and the exterior surface (123) of the tubular wall structure (121), and wherein the water system comprises, in the assembled state, a lid (140) configured to couple with the insert (120) and wherein the lid (140) comprises a fluid duct (142) configured to provide a fluid communication path between the water conduit (130) and an ambient environment, and wherein the water system comprises a fluid-tight first seal (171) joining the insert (120) with the lid (140), **characterised in that** the water system further comprises a fluid-tight second seal (172) joining the lid (140) and the vessel holder (160), and/or a fluid-tight third seal (173) joining the vessel holder (160) with the vessel (110), whereby a collection space (170) is defined, the water conduit (130) extending from the first open end (122) of the tubular wall structure (121) to the collection space (170).

2. A water system (100) according to claim 1, wherein the water conduit (130) has a thickness, t, measured perpendicular to the inner surface (115) of the side wall (114) and/or perpendicular to the exterior surface (123) of the tubular wall structure (121), of 0,1-1 mm.

3. A water system (100) according to claim 1 or 2, wherein the tubular wall structure (121) is removable from the vessel (110) in a disassembled state.

4. A water system (100) according to claim 3, wherein the vessel (110) has an center line (113), extending in the assembled state through the first open end (122) of the tubular wall structure (121), and any transverse distance, D_{T}(z), measured perpendicular to and from the center line (113) to the inner surface (115) along a constant azimuthal direction, is non-decreasing with increasing axial distance, z, from the top surface (112).

5. A water system (100) according to any of the preceding claims, wherein the bottom (111) has a top surface (112) outlined by the inner surface (115) of the side wall (114), and a maximum height difference, Δhₘₐₓ, between the first open end (122) of the tubular wall structure (121) and the top surface (112) of the bottom (111) in the assembled state is 1-5 mm.

6. A water system (100) according to any of the preceding claims, wherein the vessel holder (160) comprises a through-hole (161), and the vessel (110) is configured to be arranged in the through-hole (161) in the assembled state of the water system (100).

7. A water system (100) according to any of the preceding claims, wherein the insert (120) is supported by the vessel (110) in the assembled state.

8. A water system (100) according to any of the preceding claims, wherein the vessel (110) and/or the insert (120) is formed of a plastic material.

9. A water system (100) according to any of the preceding claims, comprising a pump (180), arranged upstream of the collection space (170) for effecting fluid flow in the water conduit (130).

10. A water system (100) according to any of the preceding claims, comprising a water supply line (150) for supplying water into the vessel (110) via the fluid duct (142) in the assembled state.

11. A water system (100) according to claim 10, wherein the lid (140) has a top surface (141), the water supply line (150) has a supply line end (151), and a minimum height difference, Δhₘᵢₙ, between the top surface (141) and the supply line end (151) in the assembled is at least 10 mm, or at least 20 mm.

12. A water system (100) according any of the preceding claims, comprising a disinfectant container (190) for storing disinfectant and a disinfectant supply line (191) for supplying disinfectant from the disinfectant container (190) into the vessel (110) via the fluid duct (142).

13. A water system (100) according to any of the preceding claims, comprising a weighing device (162) for determining weight of any liquids possibly arranged in the vessel (110) in the assembled state.

14. A dental care unit (200), comprising a water system (201) in accordance with any of claims 1 to 13.

## Patentansprüche

1. Wassersystem (100) für eine zahnärztliche Behandlungseinheit, das Wassersystem (100) umfasst:
- einen Behälter (110), der einen Boden (111) und eine Seitenwand (114) umfasst, die sich von dem Boden (111) aus erstreckt und eine Innenseite (115) aufweist;
- eine Behälterhalterung (160), wobei in einem montierten Zustand die Behälterhalterung (160) den Behälter (110) trägt und mit der zahnärztlichen Einheit in Eingriff bringbar ist; und
- ein Einsatzteil (120), das eine rohrförmige Wandstruktur (121) mit einer Außenfläche (123) umfasst und ein erstes offenes Ende (122) an seinem Bodenende und ein zweites offenes Ende 122' an seinem oberen Ende hat;
wobei das erste offene Ende (122) der rohrförmigen Wandstruktur (121) in dem Behälter (110) in dem montierten Zustand so angeordnet ist, dass eine Wasserleitung (130) gebildet wird, wobei sich die Wasserleitung (130) von dem ersten offenen Ende (122) der rohrförmigen Wandstruktur (121) zwischen der Innenseite (115) der Seitenwand (114) und der Außenfläche (123) der rohrförmigen Wandstruktur (121) erstreckt, und wobei das Wassersystem im montierten Zustand einen Deckel (140) umfasst, der so konfiguriert ist, dass er mit dem Einsatzteil (120) gekoppelt ist, und wobei der Deckel (140) einen Fluidkanal (142) umfasst, der so konfiguriert ist, dass er einen Fluidverbindungsweg zwischen der Wasserleitung (130) und einer Umgebung bereitstellt, und wobei das Wassersystem eine fluiddichte erste Dichtung (171) umfasst, die das Einsatzteil (120) mit dem Deckel (140) verbindet, **dadurch gekennzeichnet, dass** das Wassersystem ferner eine fluiddichte zweite Dichtung (172) umfasst, die den Deckel (140) und die Behälterhalterung (160) verbindet, und/oder eine fluiddichte dritte Dichtung (173), die die Behälterhalterung (160) mit dem Behälter (110) verbindet, wodurch ein Sammelraum (170) definiert wird, wobei sich die Wasserleitung (130) von dem ersten offenen Ende (122) der rohrförmigen Wandstruktur (121) zu dem Sammelraum (170) erstreckt.

2. Wassersystem (100) nach Anspruch 1, wobei die Wasserleitung (130) eine Dicke t, gemessen senkrecht zur Innenseite (115) der Seitenwand (114) und/oder senkrecht zur Außenfläche (123) der rohrförmigen Wandstruktur (121), von 0,1-1 mm aufweist.

3. Wassersystem (100) nach Anspruch 1 oder 2, wobei die rohrförmige Wandstruktur (121) in einem unmontierten Zustand von dem Behälter (110) abnehmbar ist.

4. Wassersystem (100) nach Anspruch 3, wobei der Behälter (110) eine Mittellinie (113) aufweist, die sich im montierten Zustand durch das erste offene Ende (122) der rohrförmigen Wandstruktur (121) erstreckt, und jeder Querabstand, DT (z), gemessen senkrecht zur und von der Mittellinie (113) zur Innenseite (115) entlang einer konstanten azimutalen Richtung, mit zunehmendem axialen Abstand, z, von der oberen Fläche (112) nicht abnehmend ist.

5. Wassersystem (100) nach einem der vorhergehenden Ansprüche, wobei der Boden (111) eine obere Fläche (112) aufweist, die von der Innenseite (115) der Seitenwand (114) umrissen wird, und ein maximaler Höhenunterschied, h□max, zwischen dem ersten offenen Ende (122) der rohrförmigen Wandstruktur (121) und der oberen Fläche (112) des Bodens (111) im montierten Zustand 1-5 mm beträgt.

6. Wassersystem (100) nach einem der vorhergehenden Ansprüche, wobei die Behälterhalterung (160) eine Durchgangsbohrung (161) umfasst und der Behälter (110) so konfiguriert ist, dass er in der Durchgangsbohrung (161) im montierten Zustand des Wassersystems (100) angeordnet ist.

7. Wassersystem (100) nach einem der vorhergehenden Ansprüche, wobei das Einsatzteil (120) im montierten Zustand von dem Behälter (110) getragen wird.

8. Wassersystem (100) nach einem der vorhergehenden Ansprüche, wobei der Behälter (110) und/oder das Einsatzteil (120) aus einem Kunststoffmaterial gebildet ist.

9. Wassersystem (100) nach einem der vorhergehenden Ansprüche, umfassend eine Pumpe (180), die stromaufwärts des Sammelraums (170) angeordnet ist, um eine Fluidströmung in der Wasserleitung (130) zu bewirken.

10. Wassersystem (100) nach einem der vorhergehenden Ansprüche, umfassend eine Wasserzuführleitung (150) zur Zuführung von Wasser in den Behälter (110) über den Fluidkanal (142) im montierten Zustand.

11. Wassersystem (100) nach Anspruch 10, wobei der Deckel (140) eine obere Fläche (141) hat, die Wasserzuführleitung (150) ein Zuführleitungsende (151) hat und ein minimaler Höhenunterschied, h□min , zwischen der oberen Fläche (141) und dem Zuführleitungsende (151) im montierten Zustand mindestens 10 mm oder mindestens 20 mm beträgt.

12. Wassersystem (100) nach einem der vorhergehenden Ansprüche, umfassend einen Desinfektionsmittelbehälter (190) zum Speichern von Desinfektionsmittel und eine Desinfektionsmittelzufuhrleitung (191) zum Zuführen von Desinfektionsmittel aus dem Desinfektionsmittelbehälter (190) in den Behälter (110) über den Fluidkanal (142).

13. Wassersystem (100) nach einem der vorhergehenden Ansprüche, umfassend eine Wiegevorrichtung (162) zur Bestimmung des Gewichts von Flüssigkeiten, die sich im montierten Zustand im Behälter (110) befinden können.

14. Zahnärztliche Behandlungseinheit (200), umfassend ein Wassersystem (201) nach einem der Ansprüche 1 bis 13.

## Revendications

1. Système d'eau (100) pour une unité de soins dentaires, le système d'eau (100) comprenant :
- un récipient (110), comprenant un fond (111) et une paroi latérale (114), s'étendant à partir du fond (111) et présentant une surface interne (115) ;
- un support de récipient (160), dans lequel, dans un état assemblé, le support de récipient (160) supporte le récipient (110) et peut venir en prise avec l'unité de soins dentaires ; et
- un insert (120), comprenant une structure de paroi tubulaire (121) avec une surface extérieure (123) et présentant une première extrémité ouverte (122) au niveau de son extrémité inférieure et une seconde extrémité ouverte (122') au niveau de son extrémité supérieure ;
dans lequel la première extrémité ouverte (122) de la structure de paroi tubulaire (121) est agencée dans le récipient (110) dans l'état assemblé de telle sorte qu'un conduit d'eau (130) est formé, le conduit d'eau (130) s'étendant depuis la première extrémité ouverte (122) de la structure de paroi tubulaire (121) entre la surface interne (115) de la paroi latérale (114) et la surface extérieure (123) de la structure de paroi tubulaire (121) et dans lequel le système d'eau comprend, dans l'état assemblé, un couvercle (140) configuré pour être couplé à l'insert (120) et dans lequel le couvercle (140) comprend un conduit de fluide (142) configuré pour fournir un chemin de communication fluidique entre le conduit d'eau (130) et un environnement ambiant, et dans lequel le système d'eau comprend un premier joint étanche aux fluides (171) reliant l'insert (120) au couvercle (140), **caractérisé en ce que** le système d'eau comprend en outre un deuxième joint étanche aux fluides (172) reliant le couvercle (140) et le support de récipient (160) et/ou un troisième joint étanche aux fluides (173) reliant le support de récipient (160) au récipient (110), selon lequel un espace de collecte (170) est défini, le conduit d'eau (130) s'étendant de la première extrémité ouverte (122) de la structure de paroi tubulaire (121) à l'espace de collecte (170).

2. Système d'eau (100) selon la revendication 1, dans lequel le conduit d'eau (130) présente une épaisseur, t, mesurée perpendiculairement à la surface interne (115) de la paroi latérale (114) et/ou perpendiculairement à la surface extérieure (123) de la structure de paroi tubulaire (121), de 0,1-1 mm.

3. Système d'eau (100) selon la revendication 1 ou 2, dans lequel la structure de paroi tubulaire (121) peut être retirée du récipient (110) dans un état démonté.

4. Système d'eau (100) selon la revendication 3, dans lequel le récipient (110) présente une ligne centrale (113), s'étendant, dans l'état assemblé, à travers la première extrémité ouverte (122) de la structure de paroi tubulaire (121), et n'importe quelle distance transversale, DT(Z), mesurée perpendiculairement à la ligne centrale (113) et depuis celle-ci jusqu'à la surface interne (115) le long d'une direction azimutale constante, ne diminue pas avec l'augmentation de la distance axiale, z, à partir de la surface supérieure (112).

5. Système d'eau (100) selon l'une quelconque des revendications précédentes, dans lequel le fond (111) présente une surface supérieure (112) délimitée par la surface interne (115) de la paroi latérale (114), et une différence de hauteur maximale, Δhₘₐₓ, entre la première extrémité ouverte (122) de la structure de paroi tubulaire (121) et la surface supérieure (112) du fond (111) dans l'état assemblé est de 1-5 mm.

6. Système d'eau (100) selon l'une quelconque des revendications précédentes, dans lequel le support de récipient (160) comprend un trou traversant (161) et le récipient (110) est configuré pour être agencé dans le trou traversant (161) dans l'état assemblé du système d'eau (100).

7. Système d'eau (100) selon l'une quelconque des revendications précédentes, dans lequel l'insert (120) est supporté par le récipient (110) dans l'état assemblé.

8. Système d'eau (100) selon l'une quelconque des revendications précédentes, dans lequel le récipient (110) et/ou l'insert (120) sont composés d'une matière plastique.

9. Système d'eau (100) selon l'une quelconque des revendications précédentes, comprenant une pompe (180), agencée en amont de l'espace de collecte (170) pour effectuer un écoulement de fluide dans le conduit d'eau (130).

10. Système d'eau (100) selon l'une quelconque des revendications précédentes, comprenant une conduite d'alimentation en eau (150) pour alimenter en eau le récipient (110) par le biais du conduit de fluide (142) dans l'état assemblé.

11. Système d'eau (100) selon la revendication 10, dans lequel le couvercle (140) présente une surface supérieure (141), la conduite d'alimentation en eau (150) présente une extrémité de conduite d'alimentation (151), et une différence de hauteur minimale, Δ hₘᵢₙ, entre la surface supérieure (141) et l'extrémité de conduite d'alimentation (151) dans l'état assemblé est d'au moins 10 mm ou d'au moins 20 mm.

12. Système d'eau (100) selon l'une quelconque des revendications précédentes, comprenant un récipient de désinfectant (190) pour stocker du désinfectant et une conduite d'alimentation en désinfectant (191) pour fournir du désinfectant depuis le récipient de désinfectant (190) dans le récipient (110) par le biais du conduit de fluide (142).

13. Système d'eau (100) selon l'une quelconque des revendications précédentes, comprenant un dispositif de pesée (162) pour déterminer le poids de tout liquide facultativement agencé dans le récipient (110) dans l'état assemblé.

14. Unité de soins dentaires (200), comprenant un système d'eau (201) selon l'une quelconque des revendications 1 à 13.
